# FASCICULE DE BREVET EUROPEEN

(11) **EP 1 662 095 B1**
(45) Date de publication et mention de la délivrance du brevet: **15.05.2013**
(21) Numéro de dépôt: 05292465.1
(22) Date de dépôt: 22.11.2005
(51) Int. Cl.: F01D 25/18, H02K 7/18, F01D 15/10, F16C 33/66

(54) **Lubrification des paliers d'un turboréacteur avec générateur de courant électrique intégré**
Lagerschmierung für ein Gasturbinentriebwerk mit integriertem Generator
Bearing lubrification for a gas turbine jet engine with integrated generator

(30) Priorité: 25.11.2004 FR 0412505
(43) Date de publication de la demande: 31.05.2006
(73) Titulaire: SNECMA, 75015 Paris (FR)
(72) Inventeur: Bouiller, Philippe, 77210 Samoreau (FR); Rousselin, Stéphane, 77850 Hericy (FR)
(74) Mandataire: Cardy, Sophie Marie

(56) Documents cités:
- FR-A- 1 589 681
- US-A- 5 285 123

## Description

L'invention concerne un turboréacteur double corps double flux selon la revendication 1, comportant un corps basse pression dans l'arrière duquel est disposée une turbine basse pression munie d'un rotor basse pression, ledit turboréacteur comportant une structure de support reliée à un carter et à un palier arrière sur lequel est monté ledit rotor, ledit palier arrière étant situé dans une enceinte comprenant des moyens d'alimentation en liquide de lubrification dudit palier, ladite enceinte étant mise à la pression atmosphérique par un tube d'amenée d'air coaxial audit rotor et relié à ladite enceinte par des moyens de liaison permettant une communication de gaz entre ladite enceinte et ledit tube d'amenée d'air mais garantissant l'étanchéité en liquide de lubrification depuis ladite enceinte.

Dans un moteur conventionnel, le boîtier d'accessoires équipé de pompes à carburant, de pompes de lubrification des paliers, de pompes hydrauliques pour la commande de divers organes, de générateurs électriques et du démarreur, est placé à l'extérieur du moteur et reçoit la puissance extraite du moteur au moyen d'un arbre vertical et de renvois d'angles, en particulier jusqu'au rotor, notamment le rotor basse pression.

Au fil du temps, l'augmentation des taux de compression et des températures d'entrée dans la turbine, ainsi que l'amélioration des matériaux et du rendement, ont constamment réduit la taille des moteurs pour obtenir un rapport poussée/poids toujours plus important, que ce soit pour les applications civiles ou les applications militaires.

Proportionnellement, la chaîne de prélèvement de puissance et le boîtier d'accessoires n'ont suivi qu'avec difficulté cette évolution et représentent encore une part importante du volume et de la masse des moteurs, notamment lorsque ces derniers sont de faible poussée, donc de petite taille, surtout quand ce carter d'accessoires, généralement placé sous ou sur le moteur, parfois latéralement à celui-ci, supporte un démarreur à air et un générateur électrique séparés.

L'utilisation de petits moteurs, toujours plus simples et de coût réduit, pour propulser des avions d'entraînement, des drones d'observation ou d'attaque et des missiles de croisière, oblige en plus les motoristes à privilégier la furtivité de ces moteurs. Ceci peut être envisagé par une forte réduction de leur surface frontale, ce qui procure en outre un gain de traînée significatif permettant d'augmenter l'autonomie ou la portée des aéronefs ou engins téléguidés équipés de ces moteurs. Il paraît donc souhaitable, de façon à réduire la masse et la surface frontale des moteurs, d'envisager l'intégration d'un générateur-démarreur électrique dans le moteur et de supprimer l'emploi des liaisons mécaniques pour que l'interface entre le moteur et les accessoires devienne alors une transmission électrique.

Sur les avions gros porteurs, à commandes de vol électriques ou électrohydrauliques toujours plus nombreuses, ainsi que sur les avions radar, d'alerte avancée et de surveillance électronique, les besoins en énergie électrique sont importants. Les moteurs de ces avions sont équipés de générateurs d'appoint ou auxiliaires, ce qui augmente la taille des boîtiers, ainsi que leur masse pour les supporter. Il est donc intéressant d'intégrer un générateur auxiliaire, en plus du générateur-démarreur dans le moteur, dans un moteur à haut taux de dilution, afin de réduire la taille et la masse des renvois d'angles, voire de les supprimer, et d'amincir la nacelle, en logeant certains accessoires à entraînement électrique dans le pylône.

L'objet de la présente invention est de permettre l'intégration, dans un turboréacteur du type précité, d'un générateur de courant électrique intégré coaxial à l'axe de la turbomachine, en particulier au niveau du palier arrière.

A cet effet, selon la présente invention, on propose le turboréacteur selon les dispositions de la revendication 1.Cette paroi de guidage forme une sorte de « gouttière » permettant l'écoulement dirigé du liquide de lubrification qui comporte une paroi de guidage.

De cette manière, on comprend que par la présence des moyens de liaison, malgré la prolongation de l'extrémité arrière dudit rotor basse pression en aval desdits moyens de liaison et jusqu'au générateur de courant, on assure simultanément la mise à la pression atmosphérique de ladite enceinte et le guidage du liquide de lubrification entre lesdits moyens d'alimentation en liquide de lubrification et ledit palier.

Cette solution présente aussi l'avantage supplémentaire, de permettre le placement du générateur de courant en dehors d'une enceinte comprenant un liquide de lubrification, à savoir une atmosphère dans laquelle il est délicat de placer un système électrique sans recourir à de multiples systèmes d'étanchéité.

En outre, cette position arrière ou aval du générateur de courant est un avantage pour la maintenance de ce dernier

Globalement, grâce à la solution selon la présente invention, il est possible d'ajouter la fonction de générateur de courant pour l'entraînement, en particulier de secours et/ou comme démarreur, du rotor basse pression.

Selon d'autres avantageuses dispositions préférentielles, prises seules ou en combinaison, il est prévu que :
- ladite turbine basse pression est en outre munie d'une pluralité d'étages et chaque étage de la turbine basse pression présente une couronne d'aubes fixes solidaires dudit carter et une couronne d'aubes mobiles qui s'étendent radialement à la périphérie d'un disque dudit rotor ;
- lesdits moyens de liaison sont annulaires, ce qui permet à la fois de multiplier les zones de liaison entre ladite enceinte et ledit tube d'amenée d'air et d'augmenter la surface des moyens de guidage du liquide de lubrification entre lesdits moyens d'alimentation et ledit palier ;
- lesdits moyens de liaison comportent au moins un passage radial traversant ledit rotor et relié audit tube d'amenée d'air et au moins une bague d'axe radial montée de façon solidaire avec le dit rotor dans le prolongement, en direction extérieure, dudit passage : dans ce cas la mise à la pression atmosphérique de l'enceinte s'effectue via l'intérieur de la bague ;
- lesdits moyens de liaison comportent au moins une cheminée présentant un conduit coaxial avec ladite bague qui s'étend radialement à l'extérieur de ladite paroi de guidage ;
- ladite bague est une pièce séparée de ladite cheminée, ladite bague est montée dans ledit conduit, et ladite paroi de guidage est disposée à l'extrémité radialement extérieure dudit conduit, donc de la cheminée ;
- l'extrémité radialement intérieure de ladite cheminée comporte une extension axiale dirigée en direction aval et munie d'un rebord radial tourné vers l'extérieur : ce rebord permet, sous l'effet des forces centrifuges, de diriger l'huile formant le liquide de lubrification, radialement vers l'extérieur ;
- l'extrémité radialement intérieure de ladite cheminée comporte une extension transversale, prolongée radialement par une paroi radiale s'étendant jusqu'à ladite paroi de guidage et délimitant, avec ladite extension transversale, ladite cheminée et ladite paroi de guidage, une ouverture axiale permettant la circulation du liquide de lubrification, en particulier d'amont en aval ;
- selon un deuxième mode de réalisation, ledit rotor est équipé, à l'avant dudit passage radial, d'une cavité ouverte vers l'arrière et s'étendant sous le palier arrière, ladite cavité communiquant avec ledit palier arrière par un passage, de préférence radial, et l'avant de ladite cheminée et de ladite paroi de guidage est disposé à l'emplacement de l'ouverture de ladite cavité, l'extrémité aval de ladite paroi de guidage s'étendant à l'intérieur de ladite cavité , de préférence en appui sur la face interne de la paroi radialement extérieure de ladite cavité.
- ledit générateur de courant électrique comporte un inducteur solidaire en rotation dudit rotor et un induit solidaire dudit carter, cet agencement classique étant simple à mettre en oeuvre ; et,
- ledit générateur de courant est configuré pour fonctionner en tant que démarreur dudit turboréacteur.

La présente invention porte également sur un dispositif de liaison aéraulique et un système de liaison aéraulique formé d'un ensemble radial de ces dispositifs de liaison aérauliques, afin de permettre à la fois :
- la communication de gaz entre une enceinte annulaire et un tube d'amenée d'air axial, ladite enceinte logeant un palier arrière entre un rotor entourant ledit tube d'amenée d'air et une structure de support d'un carter, et
- le guidage d'un liquide de lubrification entre des moyens d'alimentation et ledit palier arrière.

Les dispositions de l'invention permettent d'envisager un turboréacteur du type précité dans lequel les accessoires sont entraînés par des moteurs électriques alimentés par les générateurs de courant selon l'invention, et donc de supprimer les liaisons mécaniques et les renvois d'angles, d'alléger le moteur et d'amincir la nacelle dans le cas d'un turboréacteur à haut taux de dilution.

D'autres caractéristiques et avantages de l'invention ressortiront à la lecture de la description suivante faite à titre d'exemple et en référence aux dessins annexés dans lesquels :
- la figure 1 est une demi-coupe schématique d'un turboréacteur double corps double flux qui montre la disposition d'un générateur intégré à l'arrière selon l'invention ;
- la figure 2 est une vue partielle agrandie du détail II de la figure 1 et montre la disposition du générateur selon l'invention sur l'extrémité arrière du rotor basse pression ;
- la figure 3 est une vue similaire de celle de la figure 2, pour un turboréacteur double corps double flux de l'art antérieur;
- la figure 4 est une vue similaire de celle de la figure 2 plus agrandie montrant de façon plus détaillée l'enceinte et un premier mode de réalisation des moyens de liaison selon la présente invention, et en particulier les moyens de guidage du liquide de lubrification ;
- les figures 5 à 7 montrent différentes perspectives de la pièce formant un secteur des moyens de liaison ; et
- la figure 8 est une vue similaire de celle de la figure 4 montrant un deuxième mode de réalisation des moyens de guidage.

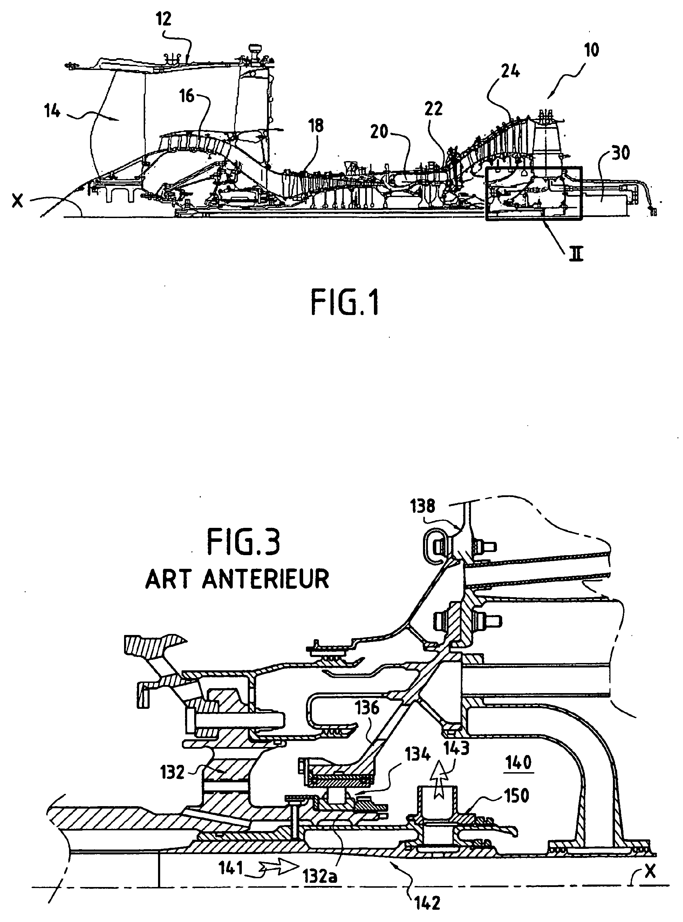

La figure 1 montre un turboréacteur double corps double flux 10, sur lequel on agence, conformément à la présente invention, un générateur de courant à l'arrière.

Plus précisément, le turboréacteur 10 d'axe X, comporte classiquement une nacelle périphérique 12 (représentée partiellement) dans laquelle sont situés, de gauche à droite sur la figure 1 (soit d'amont en aval -si l'on considère le flux d'air- ou d'avant en arrière), successivement la soufflante 14, un compresseur basse pression 16, un compresseur haute pression 18, une chambre de combustion 20, une turbine haute pression 22 et une turbine basse pression 24.

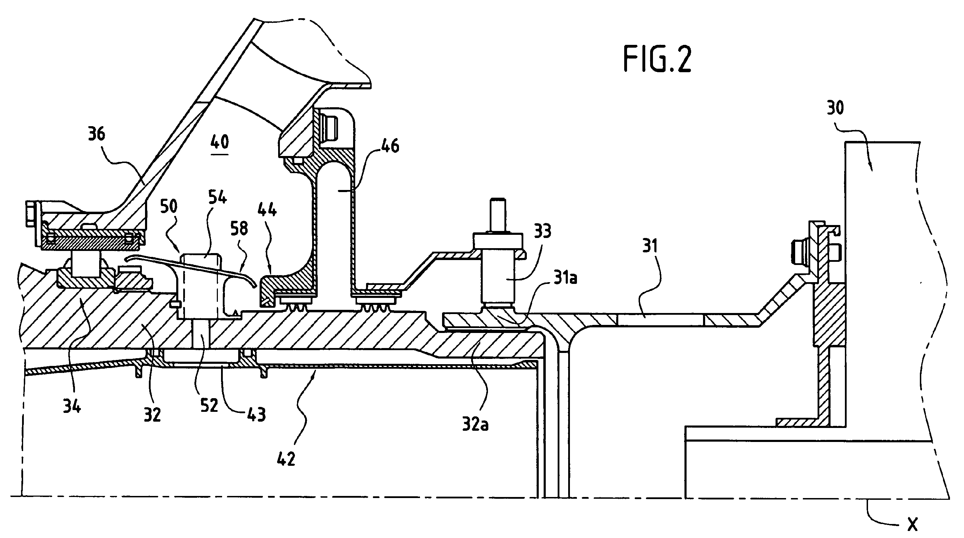

Enfin, selon la présente invention, le turboréacteur 10 est équipé d'un générateur de courant électrique 30 situé à l'arrière du turboréacteur 10 (à droite sur les figures 1 et 2).

Plus précisément, si l'on se réfère à la figure 2, on voit que le générateur de courant électrique 30 (et en particulier sa partie mobile non visible) est relié à l'extrémité arrière 32a de l'arbre 32 formant le rotor basse pression qui transmet l'énergie de la turbine basse pression 24 au compresseur basse pression 16. On voit également sur la figure 2 le palier arrière 34 monté sur l'arbre 32 depuis une structure de support 36 prolongeant de façon solidaire la partie arrière d'un carter (non visible) de la turbine basse pression 24.

Afin de mieux comprendre la présente invention, on se réfère maintenant à la figure 3 représentant la zone identique à celle de la figure 2, dans le cas d'un turboréacteur de l'art antérieur. Dans ce cas, l'arbre basse pression 132 s'étend en arrière (à droite sur la figure 3) jusqu'à une extrémité 132a sur laquelle est monté le palier arrière 134, lui-même disposé sur une structure de support 136 assemblée sur un carter 138 de la turbine basse pression.

Le palier arrière 134 se trouve dans une enceinte 140 lubrifiée au moyen d'un ou plusieurs gicleurs (non représentés) envoyant un jet d'huile en direction du palier arrière 134. Ainsi, on comprend que dans l'enceinte 140, règne une atmosphère avec un brouillard d'huile de lubrification, de sorte que cette enceinte 140 doit être maintenue étanche.

D'autre part, l'arbre basse pression 132 entoure de façon coaxiale un tube d'amenée d'air 142 formant un tube central de ventilation autour de l'axe X. De l'air à la pression atmosphérique P0 circule dans ce tube d'amenée d'air 142 en direction de l'enceinte 140 afin de placer cette dernière également à la pression atmosphérique P0 (voir les flèches 141 et 143).

Pour ce faire, l'air de ventilation provenant du tube d'amenée d'air 142 doit déboucher dans l'enceinte 140 sans que l'huile présente dans cette enceinte 140 puisse pénétrer dans le tube d'amenée d'air 142.

Ces fonctions de passage d'air et d'étanchéité à l'huile sont remplies par un ensemble annulaire de cheminées 150 rendu solidaire de l'arbre basse pression 132 : sous l'effet de la force centrifuge et grâce à la forme particulière de ces cheminées, l'air du tube d'amenée d'air 142 peut pénétrer dans l'enceinte 140 (flèches 141 et 143) sans que l'huile présente dans cette enceinte 140 puisse pénétrer dans le tube d'amenée d'air 142.

A partir de l'agencement de la figure 3, lorsqu'il s'agit de disposer d'un générateur de courant électrique à l'arrière de l'arbre basse pression 132, il est nécessaire de prolonger ce dernier vers l'arrière (à droite sur la figure 3) de sorte que l'ensemble annulaire de cheminées 150 assurant le passage d'air à la pression atmosphérique P0 doit être modifié, sans pour autant remettre en cause la lubrification du palier arrière 134.

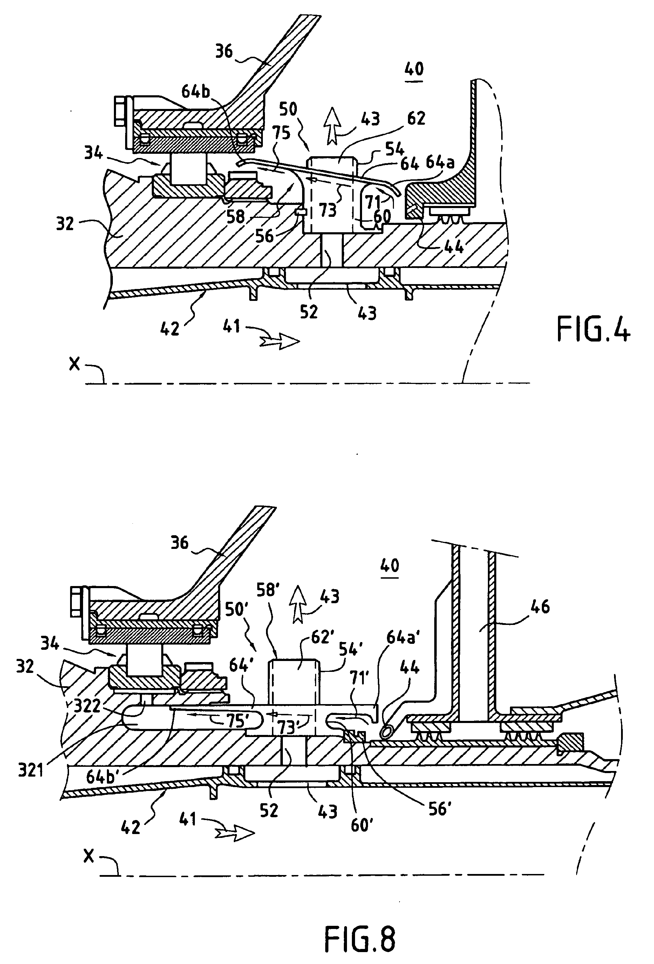

C'est dans ce contexte que la présente invention a été développée conformément à la solution présentée dans un premier et un deuxième modes de réalisation préférentiels illustrés respectivement sur les figures 2 à 7 et sur la figure 8, qui vont être décrits plus en détail ci-après.

Sur la figure 2, l'arbre basse pression 32 s'étend jusqu'à son extrémité arrière 32a située à une certaine distance derrière (à droite sur la figure 2) le palier arrière 34. Cette extrémité arrière 32a est ensuite reliée à la partie mobile du générateur électrique 30 par une virole cylindrique 31 sur laquelle est monté un capteur 33 mesurant la vitesse de rotation de l'arbre basse pression 32, et ainsi son régime de fonctionnement.

Plus précisément, l'extrémité avant 31a de la virole cylindrique 31 est équipée de cannelures coopérant avec l'extrémité arrière 32a de l'arbre basse pression 32 pour former une liaison solidaire en rotation entre la virole cylindrique 31 et l'arbre basse pression 32.

Entre le palier arrière 34 et l'extrémité arrière 32a de l'arbre basse pression 32, est disposé un (ou plusieurs) gicleur d'huile 44 ainsi qu'un système de récupération d'huile 46 placé en surpression par rapport à la pression atmosphérique.

On comprend donc de ce qui précède, qu'il est nécessaire dans le cadre de l'agencement selon la présente invention, dans lequel un générateur électrique 30 est présent, d'assurer la mise à la pression atmosphérique de l'enceinte 40 dans laquelle est situé le palier 34, sans remettre en cause la lubrification de ce dernier.

A cet effet, il est proposé des moyens de liaison annulaires permettant une communication de gaz entre cette enceinte 40 et le tube d'amenée d'air 42, et qui réalisent également un guidage pour la lubrification du palier arrière 34 depuis le gicleur 44.

Plusieurs passages radiaux 52 traversent l'arbre basse pression formant le rotor 32, chaque passage radial 52 étant en communication avec le tube d'amenée d'air 42 au niveau d'un perçage 43 correspondant réalisé dans la paroi du tube d'amenée d'air 42.

L'air passe depuis chaque perçage 43 en direction de l'enceinte 40 par les moyens de liaison annulaires.

Ces moyens de liaison annulaires sont plus clairement visibles sur les figures 4 à 7 présentant le premier mode de réalisation de façon plus détaillée.

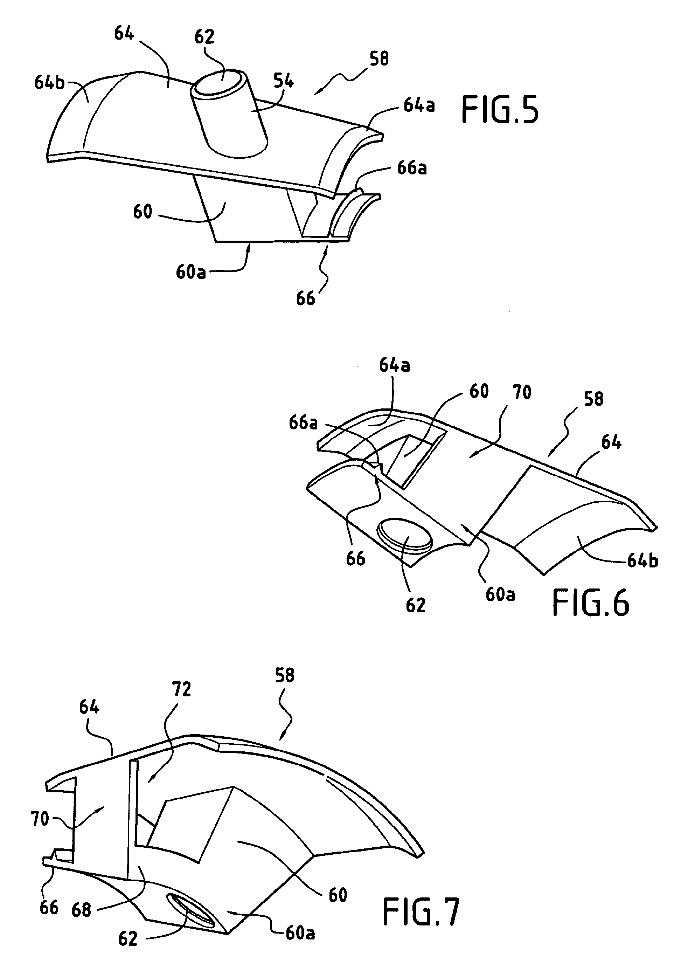

En effet, comme on peut le voir sur les figures 2 et 4 à 7, les moyens de liaison annulaires 50 du premier mode de réalisation comportent plusieurs pièces 58 formant ensemble un anneau dont un secteur angulaire est constitué d'une pièce 58 représentée en perspective sur les figures 5 à 7.

Plus précisément, chaque pièce 58 comporte une cheminée 60 s'étendant en direction radiale et délimitant un conduit intérieur 62.

Dans sa partie radialement extérieure, la pièce 58 est prolongée, depuis l'extrémité radialement extérieure de la cheminée 60, au moyen d'une paroi de guidage 64 s'étendant axialement entre un gicleur 44 et le palier 34 (voir figure 4).

Cette paroi de guidage 64 est inclinée radialement vers l'extérieur en direction du palier 34 qui se trouve radialement plus à l'extérieur que le gicleur 44 :sous l'action de la force centrifuge engendrée par la rotation de l'arbre basse pression 32, et à laquelle sont soumises la bague 54 et la pièce 58, l'huile provenant du gicleur 44 « remonte » le long de la face de la paroi de guidage 64 tournée vers l'axe X (face inférieure de la paroi de guidage 64) jusqu'au palier 34 afin de lubrifier ce dernier.

Ce parcours est visible sur la figure 4 au travers des positions successives des flèches 71, 73 et 75.

Ainsi, la paroi de guidage 64 forme des moyens de guidage du liquide de lubrification entre les moyens d'alimentation, formés d'un ou de plusieurs gicleurs 44, et le palier arrière 34.

Il est prévu que l'extrémité amont 64a (à l'arrière ou à droite sur la figure 4) et l'extrémité aval 64b (à l'avant ou à gauche sur la figure 4) de la paroi de guidage 64 sont inclinées en direction de l'axe X, en formant un déflecteur, ceci afin de faciliter la circulation et la distribution de l'huile de lubrification. Ici, les termes amont et aval concernent la circulation de l'huile de lubrification.

Les pièces 58 présentent d'autres aménagements permettant de faciliter la circulation d'huile d'amont en aval (de l'arrière vers l'avant), entre tous les secteurs angulaires et également d'aval en amont (de l'avant vers l'arrière) afin de permettre la récupération d'huile.

Ainsi, l'extrémité radialement intérieure 60a de la cheminée 60 est prolongée par une paroi formant une extension axiale 66 dirigée en direction de l'arrière et dont la face tournée en direction radialement extérieure est munie d'un rebord annulaire 66a qui facilite la récupération d'huile à la sortie du gicleur 44, cette huile étant éjectée radialement vers l'extérieur en direction de la paroi de guidage 64 par les forces centrifuges précitées.

Egalement, la paroi prolongeant l'extrémité radialement intérieure 60a de la cheminée 60 forme une extension transversale 68 elle-même prolongée radialement vers l'extérieur par une paroi radiale 70 reliée à la paroi de guidage 64.

Ainsi, la cheminée 60, la paroi constituée par l'extension transversale 68, la paroi radiale 70 et la paroi de guidage 64 délimitent une ouverture axiale 72 permettant la circulation axiale de l'huile, notamment d'amont en aval (de l'arrière vers l'avant), mais aussi de l'avant vers l'arrière en vue de la récupération de l'huile de lubrification.

Ainsi, l'huile provenant du gicleur d'huile 44 se trouve entraînée, notamment par la force centrifuge, en direction de la face inférieure de la paroi de guidage 64, au niveau de l'extrémité amont 64a (flèche 71 sur la figure 4). Ensuite, l'huile avance le long de la face inférieure de la paroi de guidage 64 en direction du palier 34, en passant successivement au travers de l'ouverture axiale 72 (flèche 73 sur la figure 4) et au niveau de l'extrémité aval 64b de la paroi de guidage 64.

La circulation d'huile entre tous les secteurs angulaires (matérialisés chacun par une pièce 58) des moyens de liaison annulaires est possible notamment dans l'espace annulaire délimité par la face inférieure de la paroi de guidage 64, la paroi de la cheminée 60 tournée vers le gicleur 44 et l'extension axiale 66.

Le conduit intérieur 62 de chaque pièce 58 est destiné à permettre le passage de l'air depuis le passage 52 jusqu'à l'enceinte 40. À cet effet, l'extrémité radialement extérieure de chaque cheminée 60 se prolonge au-delà de la paroi de guidage 64 par une bague 54.

Il faut noter que l'extrémité radialement intérieure de la cheminée 60 est rendue solidaire de l'arbre basse pression 32 en rotation au moyen d'au moins un ergot 56, de sorte que toutes les pièces 58 sont solidaires entre elles et avec l'arbre basse pression 32.

De cette façon, on comprend que la pièce 58 forme une dispositif de liaison aéraulique comportant une cheminée radiale 60 de passage de l'air présentant un conduit 62 avec une entrée proche d'un axe de rotation XX' et une sortie écartée de l'axe de rotation, et une paroi de guidage 64 pour un liquide de lubrification, s'étendant axialement autour de la cheminée 60 en étant écartée de l'entrée et de la sortie du conduit 62, la face de la paroi de guidage 64 tournée vers l'entrée du conduit 62 étant inclinée par rapport au conduit 32 de façon à permettre, par effet centrifuge lors de la rotation du dispositif autour de l'axe, l'orientation de l'écoulement du liquide entre une extrémité amont 64a et une extrémité aval 64b de la paroi de guidage 64, et ledit dispositif s'inscrivant dans un secteur angulaire définit dans une direction transversale par rapport à la direction axiale.

Avantageusement, dans ce dispositif de liaison aéraulique, l'extrémité radialement intérieure de ladite cheminée 60 comporte une extension axiale 66 dirigée en direction aval et munie d'un rebord radial 66a tourné vers l'extérieur et disposé, en direction radiale, en regard de l'extrémité amont 64a de la paroi de guidage 64 : ceci sert de ramasse-goutte de l'huile qui retombe et vient ainsi s'accumuler le long du rebord axial dirigé radialement vers l'extérieur, ce qui permet de renvoyer l'huile dans le circuit de lubrification au niveau de la face inférieure de la paroi de guidage 64.

Egalement, dans ce dispositif de liaison aéraulique, l'extrémité radialement intérieure de ladite cheminée 60 comporte une extension transversale 68, prolongée radialement par une paroi radiale 70 s'étendant jusqu'à ladite paroi de guidage 64 et délimitant, avec ladite extension transversale 68, ladite cheminée 60 et ladite paroi de guidage 64, une ouverture axiale 72 permettant la circulation du liquide de lubrification.

On comprend que l'ensemble de ces dispositifs de liaison aéraulique ou pièces 58 sont disposés selon un anneau autour de l'axe de rotation (XX'), chacun des dispositifs formant un secteur angulaire de l'anneau.

De cette façon , on forme, par un tel un ensemble de dispositifs aérauliques, un système de liaison aéraulique entre une enceinte 40 annulaire et un tube d'amenée d'air 42 axial, ladite enceinte 40 logeant un palier arrière 34 entre un rotor 32 entourant ledit tube d'amenée d'air 42 et une structure de support 36 d'un carter, ledit rotor 32 s'étendant au delà du palier arrière 34 de part et d'autre du palier arrière 34. Ce système de liaison aéraulique permet la communication de gaz entre ladite enceinte 40 et ledit tube d'amenée d'air 42 par lesdits conduits 62 de chaque cheminée 60 et par des passages radiaux 52 traversant le rotor 32, et également le guidage du liquide de lubrification entre des moyens d'alimentation 44 et ledit palier 34, le long de la face de chaque paroi de guidage 64 tournée vers l'entré du conduit 62 correspondant.Selon une alternative (non représentée) de ce premier mode de réalisation, la pièce 58 est en deux parties séparées : d'un côté une première pièce formée de la bague 54 qui vient se loger dans le conduit intérieur 62 de la cheminée 60, et de l'autre côté une deuxième pièce formée de la cheminée 60, de la paroi 66, 68, de la paroi radiale 70 et de la paroi de guidage 64.

Selon cette alternative, comme on peut le comprendre de la figure 4, la longueur en direction radiale de la pièce 58, et en particulier de la cheminée 60, est inférieure à la longueur en direction radiale de la bague 54, de sorte que cette dernière présente une extrémité radialement extérieure faisant saillie au-delà de la pièce 58, et en particulier au-delà de la paroi de guidage 64.

De plus, selon cette alternative, il est à noter que chaque deuxième pièce formée par la cheminée 60, la paroi 66, 68, la paroi radiale 70 et la paroi de guidage 64 est solidaire de la bague 54 correspondante, par exemple grâce à l'ergot 56 ou à d'autres moyens de solidarisation.

On se reportera maintenant à la figure 8 illustrant le deuxième mode de réalisation dans lequel les moyens de guidage du liquide de lubrification entre les moyens d'alimentation, formés d'un ou de plusieurs gicleurs 44, et le palier arrière 34, sont différents.

Sur cette figure 8, les éléments identiques à ceux du premier mode de réalisation portent les mêmes signes de référence.

Selon ce deuxième mode de réalisation, le rotor 32 est équipé, à l'avant dudit passage radial 52 (à sa gauche sur la figure 8), d'une cavité 321 ouverte vers l'arrière (vers la droite sur la figure 8) et s'étendant à l'avant jusque sous le palier arrière 34.

Cette cavité 321 du rotor 32 est annulaire autour de l'axe X du turboréacteur.

Cette cavité 321 du rotor 32 communique avec l'espace situé sous ledit palier arrière 34 par un passage 322 radial traversant la paroi du rotor située entre le palier arrière 34 et la cavité 321.

Les moyens de liaison annulaires 50' du deuxième mode de réalisation comportent également plusieurs pièces 58' formant chacune un secteur angulaire d'un anneau.

Chaque pièce 58' comporte une cheminée 60' traversée par la partie radialement intérieur d'un conduit radial 62' dont la partie radialement extérieur traverse une bague 54'. Cette cheminée 60' est plus courte que la cheminée 60 du premier mode de réalisation car sa partie radialement extérieure arrive à un niveau plus bas que le palier arrière 34 (si l'on considère la distance par rapport à l'axe X), alors que la cheminée 60 du premier mode de réalisation arrive au même niveau que le palier arrière 34, par rapport à l'axe X.

Comme dans le cas du premier mode de réalisation, le conduit 62' communique avec un passage radial 52 de l'arbre 32, qui est en relation avec le tube d'amenée d'air 42,via le perçage 43.

La cheminée 60' est également équipée dans sa partie radialement extérieure par une paroi de guidage 64'. Dans le cas du deuxième mode de réalisation, la face extérieure de la paroi de guidage 64' est plane et sensiblement parallèle à l'axe X et la face intérieure (tournée en direction de l'axe X) de la paroi de guidage 64' est inclinée radialement vers l'extérieur en direction du palier arrière 34 pour permettre le guidage de l'huile.

En particulier, l'avant de la cheminée 60' et de ladite paroi de guidage 64' est disposé à l'emplacement de l'ouverture de ladite cavité 321.

Plus précisément, l'extrémité aval 64b' de ladite paroi de guidage 64' s'étend même à l'intérieur de ladite cavité 321, avec la face extérieure de l'extrémité aval 64b' placée en appui sur la face interne de la paroi du rotor séparant la cavité 321 du palier arrière 34. De cette façon, l'huile remonte sous la force centrifuge depuis le gicleur le long de la face intérieure de la paroi de guidage 64' (flèches 71', 73' et 75') jusqu'à l'extrémité aval 64b' puis, entre la paroi de guidage 64' et le passage 322, l'huile remonte le long de la face interne de la paroi du rotor séparant la cavité 321 du palier arrière 34. Ensuite, l'huile s'échappe par le passage 322 en direction du palier arrière 34.

A cet effet, pour que l'huile passe depuis l'arrière de la cheminée 60' (à droite sur la figure 8) à l'avant de la cheminée 60' (à gauche sur la figure 8), les pièces 58' sont munis d'une ouverture axiale (non représentée) pouvant être similaire à l'ouverture axiale 75 du premier mode de réalisation.

L'extrémité amont 64a' comporte avantageusement un rebord tourné en direction de l'axe X, permettant de collecter plus facilement l'huile provenant du gicleur 44.

Pour retenir les pièces 58' par rapport à l'arbre 32, la solution de la figure 8 consiste à utiliser à titre de moyen de fixation des vis 56' montées dans l'arbre 32 du rotor, à l'arrière de la cheminée qui reste en butée contre la tête de la vis. La partie avant (à gauche sur la figure 8) de la cheminée 60' est retenue par un épaulement de l'arbre 32. Ces vis 56' peuvent être remplacées par une bague annulaire ouverte ou par des ergots comme dans le cas du premier mode de réalisation.

Dans ce deuxième mode de réalisation, la pièce 58' forme un dispositif de liaison aéraulique dont un ensemble forme un système de liaison aéraulique dans lequel ledit rotor 32 est équipé, à l'avant de chaque passage radial 52, d'une cavité 321 ouverte vers l'arrière et s'étendant sous le palier arrière 34, ladite cavité 321 communiquant avec ledit palier arrière 34 par un passage 322. En outre, l'avant de ladite cheminée 60' et de ladite paroi de guidage 64' est disposé à l'emplacement de l'ouverture de ladite cavité 321, l'extrémité aval 64b' de ladite paroi de guidage 64') s'étendant à l'intérieur de ladite cavité 321. Comme pour le premier mode de réalisation, selon une variante du deuxième mode de réalisation, la pièce 58' peut être réalisée séparément de la bague annulaire 54'.

La présente invention porte également sur une turbomachine comprenant un système de liaison aéraulique tel que ceux décrits ci-dessus.

## Revendications

1. Turboréacteur double corps double flux comportant un corps basse pression dans l'arrière duquel est disposée une turbine basse pression (24) munie d'un rotor basse pression (32), un carter, un palier arrière (34), une enceinte (40), un tube d'amenée d'air (42) coaxial audit rotor, des moyens de liaison (50 ; 50' et une structure de support (36) reliée audit carter et audit palier arrière (34) sur lequel est monté ledit rotor (32), ledit palier arrière (34) étant situé dans ladite enceinte (40) comprenant des moyens d'alimentation (44) en liquide de lubrification dudit palier (34), ladite enceinte (40) étant mise à la pression atmosphérique par ledit tube d'amenée d'air (42) et relié à ladite enceinte (40) par lesdits moyens de liaison (50 ; 50') permettant une communication de gaz entre ladite enceinte (40) et ledit tube d'amenée d'air (42) mais garantissant l'étanchéité en liquide de lubrification depuis ladite enceinte (40), lesdits moyens de liaison (50 ; 50') étant solidaires dudit rotor (32) et comprenant des moyens de guidage (58, 64 ; 58', 64') du liquide de lubrification entre lesdits moyens d'alimentation (44) et ledit palier (34), **caractérisé en ce que** ledit turboréacteur comporte en outre un générateur de courant électrique (30) coaxial audit corps et situé en dehors de ladite enceinte (40), ledit générateur (30) étant disposé en aval et relié à l'extrémité arrière (32a) dudit rotor basse pression (32) qui s'étend en aval desdits moyens de liaison (50 ; 50'), et **en ce que** lesdits moyens de guidage (58 ; 58') comportent une paroi de guidage (64 ; 64') s'étendant axialement, au moins la face de ladite paroi de guidage (64 ; 64') tournée vers l'axe (X) du turboréacteur étant inclinée radialement vers l'extérieur depuis lesdits moyens d'alimentation (44) en direction dudit palier (34).

2. Turboréacteur selon la revendication 1, **caractérisé en ce que** ladite turbine basse pression (24) est en outre munie d'une pluralité d'étages et **en ce que** chaque étage de la turbine basse pression présente une couronne d'aubes fixes solidaires dudit carter et une couronne d'aubes mobiles qui s'étendent radialement à la périphérie d'un disque dudit rotor (32).

3. Turboréacteur selon la revendication 1 ou 2, **caractérisé en ce que** lesdits moyens de liaison (50 ; 50') sont annulaires.

4. Turboréacteur selon la revendication 1, 2 ou 3, **caractérisé en ce que** lesdits moyens de liaison (50 ; 50') comportent au moins un passage radial (52) traversant ledit rotor (32) et relié audit tube d'amenée d'air (42) et au moins une bague (54 ; 54') d'axe radial montée de façon solidaire avec le dit rotor (32) dans le prolongement, en direction extérieure, dudit passage (52).

5. Turboréacteur selon la revendication 4, **caractérisé en ce que** lesdits moyens de liaison (50 ; 50') comportent au moins une cheminée (60 ; 60') présentant un conduit (62 ; 62') coaxial avec ladite bague (54 ; 54') qui s'étend radialement à l'extérieur de ladite paroi de guidage (64 ; 64').

6. Turboréacteur selon la revendication 6, **caractérisé en ce que** ladite bague (54 ; 54') est une pièce séparée de ladite cheminée (60 ; 60'), **en ce que** ladite bague (54 ; 54') est montée dans ledit conduit (62 ; 62') et **en ce que** ladite paroi de guidage (64) est disposée à l'extrémité radialement extérieure dudit conduit (62 ; 62').

7. Turboréacteur selon la revendication 5 ou 6, **caractérisé en ce que** l'extrémité radialement intérieure de ladite cheminée (60) comporte une extension axiale (66) dirigée en direction aval et munie d'un rebord radial (66a) tourné vers l'extérieur.

8. Turboréacteur selon la revendications 4 et 5, **caractérisé en ce que** l'extrémité radialement intérieure de ladite cheminée (60) comporte une extension transversale (68), prolongée radialement par une paroi radiale (70) s'étendant jusqu'à ladite paroi de guidage (64) et délimitant, avec ladite extension transversale (68), ladite cheminée (60) et ladite paroi de guidage (64), une ouverture axiale (72) permettant la circulation du liquide de lubrification.

9. Turboréacteur selon les revendications 4 et 6, **caractérisé en ce que** ledit rotor (32) est équipé, à l'avant dudit passage radial (52), d'une cavité (321) ouverte vers l'arrière et s'étendant sous le palier arrière (34), ladite cavité (321) communiquant avec ledit palier arrière (34) par un passage (322) et **en ce que** l'avant de ladite cheminée (60') et de ladite paroi de guidage (64') est disposé à l'emplacement de l'ouverture de ladite cavité (321), l'extrémité aval (64b') de ladite paroi de guidage (64') s'étendant à l'intérieur de ladite cavité (321).

10. Turboréacteur selon l'une quelconque des revendications précédentes, **caractérisé en ce que** ledit générateur (30) de courant électrique comporte un inducteur solidaire en rotation dudit rotor (32) et un induit solidaire dudit carter.

11. Turboréacteur selon l'une quelconque des revendications précédentes, **caractérisé en ce que** ledit générateur (30) de courant est configuré pour fonctionner en tant que démarreur dudit turboréacteur.

## Patentansprüche

1. Zweiwellen-Zweistromtriebwerk, umfassend einen Niederdruckkörper, in dessen hinteren Teil eine mit einem Niederdruckrotor (32) ausgestattete Niederdruckturbine (24) angeordnet ist, ein Gehäuse, ein hinteres Lager (34), einen Raum (40), ein zu dem Rotor koaxiales Luftzuführrohr (42), Verbindungsmittel (50; 50') und eine Tragstruktur (36), die mit dem Gehäuse und mit dem hinteren Lager (34), an dem der Rotor (32) angebracht ist, verbunden ist, wobei das hintere Lager (34) in dem Raum (40) gelegen ist, der Mittel zur Versorgung (44) des Lagers (34) mit Schmierflüssigkeit umfaßt, wobei der Raum (40) mittels des Luftzuführrohrs (42), das durch die Verbindungsmittel (50; 50'), welche eine Gasverbindung zwischen dem Raum (40) und dem Luftzuführrohr (42) ermöglichen, aber die Schmierflüssigkeitsdichtigkeit von dem Raum (40) aus sicherstellen, mit dem Raum (40) verbunden ist, auf atmosphärischen Druck gebracht wird, wobei die Verbindungsmittel (50; 50') mit dem Rotor (32) fest verbunden sind und Mittel zum Führen (58, 64; 58', 64') der Schmierflüssigkeit zwischen den Versorgungsmitteln (44) und dem Lager (34) umfassen, **dadurch gekennzeichnet, daß** das Turbostrahltriebwerk ferner einen Stromgenerator (30) umfaßt, der zu dem Körper koaxial und außerhalb des Raums (40) gelegen ist, wobei der Generator (30) nachgeschaltet ist und mit dem hinteren Ende (32a) des Niederdruckrotors (32), das sich im Anschluß an die Verbindungsmittel (50; 50') erstreckt, verbunden ist, und daß die Führungsmittel (58; 58') eine axial verlaufende Führungswand (64; 64') umfassen, wobei wenigstens die der Achse (X) des Turbostrahltriebwerks zugewandte Seite der Führungswand (64; 64') von den Versorgungsmitteln (44) in Richtung des Lagers (34) radial nach außen geneigt ist.

2. Turbostrahltriebwerk nach Anspruch 1, **dadurch gekennzeichnet, daß** die Niederdruckturbine (24) ferner mit einer Vielzahl von Stufen ausgestattet ist und daß jede Stufe der Niederdruckturbine einen Kranz von Leitschaufeln, die mit dem Gehäuse fest verbunden sind, sowie einen Kranz von Laufschaufeln, die sich am Umfang einer Scheibe des Rotors (32) radial erstrecken, aufweist.

3. Turbostrahltriebwerk nach Anspruch 1 oder 2, **dadurch gekennzeichnet, daß** die Verbindungsmittel (50; 50') ringförmig sind.

4. Turbostrahltriebwerk nach Anspruch 1, 2 oder 3, **dadurch gekennzeichnet, daß** die Verbindungsmittel (50; 50') wenigstens einen radialen Durchgang (52), der den Rotor (32) durchquert und der mit dem Luftzuführrohr (42) verbunden ist, sowie wenigstens einen Ring (54; 54') mit radialer Achse, der mit dem Rotor (32) in der Verlängerung des Durchgangs (52), in Außenrichtung, fest angebracht ist, umfassen.

5. Turbostrahltriebwerk nach Anspruch 4, **dadurch gekennzeichnet, daß** die Verbindungsmittel (50; 50') wenigstens einen Schacht (60; 60') umfassen, der einen Kanal (62; 62') aufweist, welcher mit dem Ring (54; 54'), der außerhalb der Führungswand (64; 64') radial verläuft, koaxial ist.

6. Turbostrahltriebwerk nach Anspruch 5, **dadurch gekennzeichnet, daß** der Ring (54; 54') ein von dem Schacht (60; 60') getrenntes Teil ist, daß der Ring (54; 54') in dem Kanal (62; 62') angebracht ist und daß die Führungswand (64) an dem radial äußeren Ende des Kanals (62; 62') angeordnet ist.

7. Turbostrahltriebwerk nach Anspruch 5 oder 6, **dadurch gekennzeichnet, daß** das radial innere Ende des Schachts (60) eine axiale Erstreckung (66), die in stromabwärtige Richtung gerichtet und mit einem nach außen weißenden radialen Rand (66a) versehen ist, umfaßt.

8. Turbostrahltriebwerk nach Anspruch 4 und 5, **dadurch gekennzeichnet, daß** das radial innere Ende des Schachts (60) eine Quererstreckung (68) umfaßt, die durch eine radiale Wand (70) radial verlängert ist, welche sich bis zu der Führungswand (64) erstreckt und mit der Quererstreckung (68) den Schacht (60) und die Führungswand (64) begrenzt, wobei eine axiale Öffnung (72) das Zirkulieren der Schmierflüssigkeit ermöglicht.

9. Turbostrahltriebwerk nach den Ansprüchen 4 und 5, **dadurch gekennzeichnet, daß** der Rotor (32) am vorderen Teil des radialen Durchgangs (52) mit einem Hohlraum (321), der nach hinten offen ist und sich unter dem hinteren Lager (34) erstreckt, ausgestattet ist, wobei der Hohlraum (321) mit dem hinteren Lager (34) über einen Durchgang (322) in Verbindung steht, und daß der vordere Teil des Schachts (60') und der Führungswand (64') an der Stelle der Öffnung des Hohlraums (321) angeordnet ist, wobei das stromabwärtige Ende (64b') der Führungswand (64') sich in den Hohlraum (321) erstreckt.

10. Turbostrahltriebwerk nach einem der vorhergehenden Ansprüche, **dadurch gekennzeichnet, daß** der Stromgenerator (30) einen mit dem Rotor (32) drehfesten Stator und einen mit dem Gehäuse fest verbundenen Rotor umfaßt.

11. Turbostrahltriebwerk nach einem der vorhergehenden Ansprüche, **dadurch gekennzeichnet, daß** der Stromgenerator (30) dazu ausgelegt ist, als Starter des Turbostrahltriebwerks zu funktionieren.

## Claims

1. A two-spool bypass turbojet comprising a low-pressure spool having, at its rear end, a low-pressure turbine (24) provided with a low-pressure rotor (32), a casing, a rear bearing (34), an enclosure (40), an air feed pipe (42) coaxial with said rotor, link means (50; 50') and a support structure (36) connected to said casing and to said rear bearing (34) on which said rotor (32) is mounted, said rear bearing (34) being situated in said enclosure (40) having means (44) for feeding said bearing (34) with liquid lubricant, said enclosure (40) being put to atmospheric pressure by said air feed pipe (42) and connected to said enclosure (40) via said link means (50; 50') proving gas communication between said enclosure (40) and said air feed pipe (42) while guaranteeing sealing against liquid lubricant from said enclosure (40), said link means (50; 50') being secured to said rotor (32) and including guide means (58, 64; 58', 64') for guiding the liquid lubricant between said feed means (44) and said bearing (34), the turbojet being **characterized in that** it further comprises an electricity generator (30) coaxial with said spool and situated outside said enclosure (40), said generator (30) being disposed and being connected to the rear end (32a) of said low-pressure rotor (32) which extends downstream from said link means (50; 50'), and **in that** said guide means (58; 58') comprise a guide wall (64; 64) extending axially, at least the face of said guide wall (64; 64') that faces towards the axis (X) of the turbojet being inclined radially outwards on going from said feed means (44) towards said bearing (34).

2. A turbojet according to claim 1, **characterized in that** said low-pressure turbine (24) is also provided with a plurality of stages, and **in that** each stage of the low-pressure turbine presents a ring of stationary blades secured to said casing and a ring of moving blades extending radially from the periphery of a disk of said rotor (32).

3. A turbojet according to claim 1 or claim 2, **characterized in that** said link means (50; 50') are annular.

4. A turbojet according to claim 1, 2, or 3, **characterized in that** said link means (50; 50') include at least one radial passage (52) passing through said rotor (32) and connected to said air feed pipe (42) and to at least one radial-axis tube (54; 54') secured to said rotor (32) and extending said passage (52) in an outward direction.

5. A turbojet according to claim 4, **characterized in that** said link means (50; 50') comprise at least one chimney (60; 60') presenting a duct (62; 62') coaxial with said tube (54; 54') that extends radially outwards from said guide wall (64; 64').

6. A turbojet according to claim 5, **characterized in that** said tube (54; 54') is a part that is separate from said chimney (60; 60'), **in that** said tube (54; 54') is mounted in said duct (62; 62'), and **in that** said guide wall (64) is disposed at the radially-outer end of said duct (62; 62').

7. A turbojet according to claim 5 or claim 6, **characterized in that** the radially-inner end of said chimney (60) includes an axial extension (66) directed downstream and provided with a radial rim (66a) facing outwards.

8. A turbojet according to claims 4 and 5, **characterized in that** the radially-inner end of said chimney (60) includes a transverse extension (68) extended radially by a radial wall (70) extending to said guide wall (64) and co-operating with said transverse extension (68), said chimney (60), and said guide wall (64) to define an axial opening (72) allowing the liquid lubricant to flow.

9. A turbojet according to claims 4 and 5, **characterized in that** said rotor (32) is fitted in front of said radial passage (52) with a rearwardly-open cavity (321) extending under the rear bearing (34), said cavity (321) communicating with said rear bearing (34) via a passage (322), and **in that** the front of said chimney (60') and of said guide wall (64') is disposed at the location of the opening of said cavity (321), the downstream end (64b') of said guide wall (64') extending inside said cavity (321).

10. A turbojet according to any preceding claim, **characterized in that** said electricity generator (30) comprises a primary magnetic circuit constrained to rotate with said rotor (32) and a secondary magnetic circuit secured to said casing.

11. A turbojet according to any preceding claim, **characterized in that** said electricity generator (30) is configured to operate as a starter for said turbojet.
